**Europäisches Patentamt**

**European Patent Office**

**Office européen des brevets**

(19)

(11) Numéro de publication : **0 323 784 B1**

(12)

# FASCICULE DE BREVET EUROPEEN

(45) Date de publication du fascicule du brevet :
**08.07.92 Bulletin 92/28**

(51) Int. Cl.$^5$ : **C10G 11/05, C10G 11/18, B01J 29/06**

(21) Numéro de dépôt : **88403343.2**

(22) Date de dépôt : **28.12.88**

(54) **Utilisation d'un catalyseur contenant une zéolithe de la famille érionite dans un procédé de craquage comportant au moins unezone de régénération.**

(30) Priorité : **08.01.88 FR 8800181**

(43) Date de publication de la demande :
**12.07.89 Bulletin 89/28**

(45) Mention de la délivrance du brevet :
**08.07.92 Bulletin 92/28**

(84) Etats contractants désignés :
**BE DE GB NL**

(56) Documents cités :
**EP-A- 0 020 154**
**EP-A- 0 062 779**
**EP-A- 0 092 065**
**EP-A- 0 190 949**
**EP-A- 0 278 839**
**FR-A- 2 251 615**
**US-A- 4 584 090**

(73) Titulaire : **INSTITUT FRANCAIS DU PETROLE**
**4, Avenue de Bois Préau**
**F-92502 Rueil-Malmaison (FR)**

(72) Inventeur : **Marcilly, Christian**
**91 ter rue Condorcet**
**F-78800 Houilles (FR)**
Inventeur : **Raatz, Francis**
**10, Allée Jacques Prévert**
**F-78260 Acheres (FR)**
Inventeur : **Deves, Jean-Marie**
**75, rue des Bons Raisins**
**F-92500 Rueil Malmaison (FR)**

## Description

La présente invention entre dans le cadre du craquage catalytique à l'état fluide de charges d'hydrocarbures.

On sait que l'industrie pétrolière utilise de façon usuelle des procédés de craquage, dans lesquels des molécules d'hydrocarbures à haut poids moléculaire et à point d'ébullition élevé sont scindées en molécules plus petites, qui bouillent dans des domaines de températures plus faibles, convenant à l'usage recherché.

Le procédé le plus couramment employé dans ce but, à l'heure actuelle, est le procédé dit de craquage catalytique à l'état fluide (en anglais, Fluid Catalytic Cracking, ou encore procédé FCC). Dans ce type de procédé, la charge d'hydrocarbures est vaporisée par mise en contact à haute température avec un catalyseur de craquage, lequel est maintenu en suspension dans les vapeurs de la charge. Après que l'on ait atteint par craquage la gamme de poids moléculaire désirée, avec un abaissement correspondant des points d'ébullition, le catalyseur est séparé des produits obtenus, strippé, régénéré par combustion du coke formé, puis remis en contact avec la charge à craquer.

Dans de nouveaux procédés FCC, on utilise deux zones de régénération à travers lesquelles circule le catalyseur usé.

Les charges à craquer sont habituellement injectées dans la zone réactionnelle à une température généralement comprise entre 480°C et 540°C, sous une pression relative de 0,7 à 3,5 bar, tandis que la température du catalyseur régénéré qui arrive dans cette zone peut être de l'ordre de 600 à 950°C.

Le catalyseur est introduit à la base d'un tube d'un élévateur du type ascendant (ou "riser") ou au sommet d'un tube du type descendant (ou "dropper" en langue anglaise) en une quantité déterminée par exemple par l'ouverture ou la fermeture d'une vanne. Les grains de catalyseurs sont alors conditionnés et accélérés vers le haut du "riser" par injection à la base de ce dernier, d'un fluide gazeux ou accéléré vers le bas du dropper par injection au sommet de ce dernier, d'un fluide gazeux. Cette injection est faite à l'aide d'un distributeur de fluide. La charge à craquer est introduite en aval et vaporisée au moins partiellement à l'aide d'un dispositif approprié dans le flux dense de grains de catalyseur.

Le "riser" ou le dropper débouchent à leur autre extrémité dans une enceinte qui leur est par exemple concentrique et dans laquelle s'effectuent, d'une part, la séparation de la charge craquée et, d'autre part, le strippage du catalyseur usé. Le catalyseur est séparé de l'effluent, entraîné par un système cyclonique, puis épuré et purifié.

Les charges d'hydrocarbures susceptibles d'être injectées dans les unités du type décrit plus haut peuvent contenir des hydrocarbures ayant des points d'ébullition se situant entre 200 et 550°C ou plus, et leur densité peut varier entre 10 et 35°API. Ces charges également, peuvent être des charges lourdes contenant des hydrocarbures dont le point d'ébullition peut aller jusqu'à 750°C et plus, et dont la densité peut varier entre 10 et 35°API, voire entre 0 et 25°API.

Par exemple, on peut citer comme charges, celles présentant des points d'ébullition finaux de l'ordre de 400°C, tels que des gazoles sous vide, mais aussi des huiles hydrocarbonées plus lourdes, telles que des pétroles bruts et/ou stabilisés, et des résidus de distillation atmosphérique ou de distillation sous vide ; ces charges peuvent le cas échéant avoir reçu un traitement préalable tel que, par exemple, un hydrotraitement en présence par exemple de catalyseurs de type cobalt-molybdène ou nickel-molybdène.

Ces charges peuvent être diluées ou non par des coupes d'hydrocarbures ayant déjà subi l'opération de craquage, qui sont recyclées, comme par exemple des huiles légères de recyclage ("light cycle oil, L.C.O.) et/ou des huiles lourdes de recyclage ("heavy cycle oil", H.C.O.) et/ou la fraction la plus lourde non transformée bouillant généralement au-dessus de 500°C ou 550°C et communément appelée "slurry". Suivant le mode préféré de l'invention, ces charges sont disponibles et préchauffées dans un domaine de température compris entre 200 et 450°C avant leur traitement.

La présente invention concerne un procédé de craquage catalytique utilisant un catalyseur particulier qui permet d'améliorer la flexibilité sur la structure des rendements en produits et la qualité de la coupe essence, c'est à dire les indices d'octane recherche et moteur de cette dernière.

On rappelle que d'une façon générale, dans le domaine du craquage catalytique, la mise en oeuvre du procédé dépend notamment de la nature des effluents hydrocarbonés que souhaite obtenir l'utilisateur en fonction des objectifs de raffinage du moment : ainsi d'une façon générale un craquage catalytique d'une huile permet d'obtenir :
- des gaz légers (hydrogène, hydrocarbures à 1 et 2 atomes de carbone par molécule,
- du propane,
- du propylène (C3=)
- des hydrocarbures à 4 atomes de carbone par molécule (C4 saturés et iso C4),
- des hydrocarbures insaturés à 4 atomes de carbone,

2

– des essences,

– une huile relativement légère ou diluant léger ("light cycle oil" ou "L.C.O."),

– une huile relativement lourde ou diluant lourd ("heavy cycle oil" ou "H.C.O"),

– un résidu ou "slurry" qui est généralement purifié du catalyseur entraîné pour obtenir une huile clarifiée ("clarified oil" ou CO) ou une huile décantée ("Decanted oil ou DO).

Il peut arriver qu'un objectif de raffinage dans le cadre d'un craquage catalytique, soit l'obtention d'une quantité accrue de gaz de pétrole liquéfiés (C3-C4 ou LPG) et plus particulièrement d'une quantité accrue de propylène voire de butènes et/ou d'isobutane. Par ailleurs, il est bien connu que la tendance générale est de réduire la teneur en additif à base de plomb dans les essences constituant les carburants automobile et que ceci nécessitera la fabrication d'essences notamment par craquage catalytique, ayant des indices d'octane clairs recherche (RON) et moteur (MON) améliorés. Certains utilisateurs cherchent soit à augmenter sensiblement la production de C3 insaturé (propylène) sans augmenter la production d'hydrocarbures en C4 et de gaz sec saturés (H2, C1, C2), soit à améliorer sensiblement la production de C3 insaturé (propylène) et d'iso C4 sans augmenter notablement la production de gaz sec saturés (H2, C1, C2), soit à augmenter sensiblement la production de C3 insaturé (propylène) et éventuellement des C4, notamment insaturés, sans augmenter la production des gaz secs saturés (H2, C1, C2). Dans les 3 cas, il est le plus souvent recherché d'y associer une production maximale d'essence d'indice d'octane particulièrement élevé.

Ce sont les 2 dernières possibilités qui sont recherchées dans la présente demande de brevet et qui peuvent être obtenues par l'emploi d'un catalyseur spécifique de craquage catalytique.

Le procédé de la présente invention permet d'atteindre simultanément plusieurs de ces objectifs, notamment une amélioration notable de la qualité de l'essence et une augmentation des rendements en propylène, butènes et isobutane.

Le procédé de la présente invention consiste à ajouter au catalyseur de base, qui contient au moins une zéolithe de structure faujasite (zéolithes X ou Y), une quantité d'une zéolithe d'ouverture des pores principaux plus petite que celle de la faujasite, compris entre 0,60 et 0,68 nm. Le catalyseur ainsi obtenu a déjà été décrit dans la demande de brevet européen EP-A-278 839.

Mais il a été observé que dans des conditions sévères de régénération du catalyseur utilisé, c'est-à-dire à température élevée supérieure ou égale à 770°C et en présence d'une quantité substantielle de vapeur d'eau qui peut représenter plus de 25 % en volume de l'atmosphère gazeuse du régénérateur, le constituant actif du catalyseur, (la zéolithe de structure offrétite, qui permet d'obtenir des gains importants sur l'octane de l'essence et les rendements en propylène, butènes et isobutane), perd assez rapidement une part notable de son activité. Or il a été également découvert dans la présente invention que les qualités de ce constituant actif qu'est la zéolithe de structure offrétite, permettent d'opérer avec une température moyenne du régénérateur ou des régénérateurs inférieure à 770°C, en présence de quantités restreintes de vapeur d'eau, à savoir de 0,5 à 25 %, de préférence 0,5 à 23 % en volume (par rapport aux gaz introduits dans la zone de régénération) de vapeur d'eau ; il est même possible que la température ne dépasse pas 740°C et de manière encore plus préférée ne dépasse pas 700°C et il est également simultanément possible, que le pourcentage de vapeur d'eau dans la régénération soit compris entre 0,5 et 6 % en volume entre 740 et 770°C, ou soit comprise entre 0,5 et 15 % volume entre 720 et 740°C ou soit compris entre 0,5 et 25 % et même 0,5 et 23 % en volume entre 720 et 690°C.

Un type de procédé de craquage catalytique particulièrement bien adapté à l'utilisation de la zéolithe offrétite est celui comportant deux zones successives de régénération, tel que par exemple le procédé commercial appelé R2R. Dans ce type de procédé en effet, la première zone de régénération permet de brûler 30 à 70 % du coke environ tout en maintenant une température comprise généralement entre 650 et 720°C en présence d'une atmosphère contenant jusqu'à 25 % en volume de vapeur d'eau la seconde zone de régénération permet de brûler le coke résiduel en maintenant une température comprise entre 720 et 800°C en présence d'une atmosphère contenant moins de 10 % en volume de vapeur d'eau.

Avec un tel procédé à deux régénérateurs, il est généralement possible de se maintenir dans des conditions de régénération peu sévères situées en dessous des limites de température et de teneurs en vapeur d'eau décrites précédemment et qui permettent de profiter au mieux des qualités de la zéolithe de structure offrétite utilisée dans la présente invention.

Il peut cependant arriver, lorsque des charges très lourdes sont traitées dans l'unité de craquage, telles celles caractérisées par une valeur du carbone Conradson élevée (par exemple entre 1.5 et 8 % en poids), que la production de coke sur le catalyseur soit nettement plus élevée que celles obtenues habituellement avec des charges plus légères, ce qui impose des températures de régénération plus élevées que les températures limites requises pour la zéolithe de structure offrétite. Dans ce cas il peut alors être nécessaire d'utiliser une technique de refroidissement des deux régénérateurs et plus particulièrement du second régénérateur, consistant à soutirer une certaine proportion des calories dégagées par la combustion du coke, à l'aide d'un système

3

de refroidissement constitué par exemple d'un ou plusieurs serpentins métalliques creux à l'intérieur desquels circule de l'eau sous forme essentiellement de vapeur ou encore constitué d'un tube de gros diamètre situé à l'extérieur du régénérateur et dans lequel le catalyseur chaud sortant du régénérateur circule en perdant une partie de ses calories avant de pénétrer à nouveau dans la même zone de régénération à un niveau généralement différent de celui où il est entré. Un tel tube de circulation est habituellement appelé jambe de circulation du catalyseur.

Parmi les zéolithes susceptibles de permettre l'obtention d'un catalyseur susceptible d'améliorer les rendements en produits légers à 3 et 4 atomes de carbone et notamment en propylène, butènes et isobutane et surtout d'augmenter de manière très notable les indices d'octane recherche et moteur de l'essence, on a découvert de façon surprenante que des zéolithes de la famille de l'érionite, possèdent ces propriétés. Elles permettent d'obtenir ainsi des rendements en propylène, butènes et isobutanes et des indices d'octane de l'essence nettement supérieurs à ceux qui peuvent être obtenus avec les catalyseurs zéolithiques classiques de craquage, surtout lorsqu'elles sont utilisées en additif de ces derniers. Ces zéolithes de la famille érionite, sont les offrétites stabilisées et désaluminées, caractérisées notamment par un rapport molaire silice sur alumine supérieur ou égal à 15, qui permettent d'obtenir des catalyseurs particulièrement performants. L'offrétite stabilisée et désaluminée est obtenue à l'aide de traitements modificateurs qui permettent d'ajuster à volonté la composition en aluminium et en silicium de sa charpente aluminosilicatée. Sa préparation et ses caractéristions ont été décrites dans le brevet européen EP-B-190949.

L'offrétite est une zéolithe naturelle ou synthétique, appartenant au groupe chabazite. Sa structure a longtemps été considérée comme identique à celle de l'érionite, zéolithe de la même famille, par les similitudes de leurs spectres de diffraction X (HEY M.H. & FEJER E.E., Min. Mag. 33, 66, 192). Cependant, ces deux structures sont différentes d'une part, la maille hexagonale de l'offrétite a une dimension suivant l'axe c qui est la moitié de celle de l'érionite (BENNETT J.M. & GARD J.A., Nature 214, 1005, 1967), et ainsi, les raies 1 impaires présentes dans les spectres de diffraction X de l'érionite sont absentes dans les spectres de l'offrétite (GARD J.A. & TAIT J.M., Molecular Sieve Zeolites-1, Advan. Chem. Ser. 101, 230, 1971) d'autre part, les séquences d'empilement dans deux zéolithes sont différentes (WHYTE T.T. Jr, WU E.L., KERR G.T. & VENUTO P.B., J. Catal. 20, 80, 1971). L'offrétite possède ainsi une structure beaucoup plus ouverte que l'érionite. Des défauts d'empilement peuvent survenir dans ces structures, donnant lieu à la formation d'érionite T qui est une zéolithe de structure offrétite avec des défauts d'empilement de type érionite.

Le catalyseur utilisé dans la présente invention renferme un mélange d'une matrice, d'une zéolithe à structure ouverte dont la définition sera donnée ci-dessous, et d'une offrétite. Un tel catalyseur peut être préparé par toutes méthodes bien connues de l'homme du métier. Il a été décrit dans une précédente demande de brevet européen de la demanderesse (EP-A-278 839). Ainsi il peut être obtenu par incorporation simultanée de l'offrétite et de la zéolithe de structure ouverte à la matrice selon les méthodes classiques de préparation des catalyseurs de craquage contenant une zéolithe. Le catalyseur peut être également obtenu par mélange mécanique d'un produit comprenant une matrice et une zéolithe de structure ouverte (voir ci-dessous la définition de la structure ouverte) telle que par exemple une zéolithe Y, et d'un produit à base de l'offrétite décrite ci-avant qui est par exemple un mélange de ladite zéolithe avec une matrice.

Le mélange matrice-zéolithe de structure ouverte employé dans la préparation du catalyseur de la présente invention est généralement un catalyseur classique de craquage selon l'art antérieur (par exemple un catalyseur du commerce). La zéolithe peut être une zéolithe X, bêta, oméga, et plus particulièrement une zéolithe Y, notamment les zéolithes Y ultrastables, enrichies par exemple avec au moins un métal de la famille des terres rares ou les nouvelles zéolithes Y enrichies en silice par des traitements chimiques, appelées LZ210 et décrites notamment dans les brevets US-A-4.503.023 et 4.534.853, EP-A-0.139.291 et 0.124.120 ; l'offrétite, décrite ci-dessus que l'on emploie pour fabriquer le catalyseur de l'invention peut alors être considérée comme un additif qui peut être employé tel quel en vu de son mélange avec le catalyseur classique de craquage défini ci-avant ou être préalablement incorporé à une matrice, l'ensemble matrice-offrétite constituant alors l'additif que l'on mélange au catalyseur classique de craquage défini ci-avant, par exemple, par mélange mécanique des grains contenant l'offrétite et des grains de catalyseur classique de craquage.

On a découvert que les catalyseurs les plus performants pour la production sélective de propylène, butènes et isobutane et l'amélioration de l'indice d'octane de l'essence contenaient des offrétites fortement enrichies en silice. Plus précisémment ces offrétites ont les caractéristiques suivantes :

– ouverture des canaux dodécazonaux principaux inférieure à $6,8 \times 10^{-10}$m (6,8 Angstroms),

– rapport molaire $SiO_2/Al_2O_3$ supérieur à environ 15 et de préférence supérieur à environ 20 (notamment entre 15 et 500 et plus particulièrement entre 30 et 500),

– paramètres cristallins $\vec{a}$ et $\vec{c}$ compris respectivement pour $\vec{a}$ entre environ 1,285 et environ 1,315 nm et de préférence entre 1,290 et 1,310 nm, pour $\overset{?}{c}$ entre 0,748 et 0.757 nm,

– teneur en potassium inférieure à 1,5 % en poids et de préférence à 0,5 % en poids (la teneur totale en métaux alcalins étant de préférence inférieure à 1,5 % en poids), et avec de préférence en outre :

– capacité d'adsorption d'azote à 77 K et à un rapport P/Po de 0,19 supérieur à 0,15 cm³ liquide par gramme et de préférence à 0,20 cm³ liquide par gramme,

– capacité d'adsorption du cyclohexane, à 25°C et à un rapport P/Po de 0,25, supérieure à 3 et de préférence à 4 % en poids,

– capacité d'adsorption d'eau, à 25°C pour un rapport P/Po de 0,1 inférieure à 15 % et de préférence inférieure à environ 10 % en poids, et avec de préférence l'existence d'une microporosité secondaire, mesurée par la méthode BJH (définie dans EP N° 190.949), située entre 3 et 5 nm et correspondant à environ 5 à 50 % du volume poreux total de la zéolithe.

Le catalyseur utilisé dans la présente invention renferme :

a) De 20 à 95 % et de préférence de 30 à 80 % et d'une manière souvent avantageuse de 50 à 80 % en poids d'au moins une matrice (constituant A) ;

b) De 1 à 70 % et de préférence de 4 à 60 % et d'une manière souvent avantageuse de 10 à 50 % en poids d'au moins une zéolithe de structure ouverte autre qu'une zéolithe de la famille de l'érionite (constituant B) ; le terme zéolithe de structure ouverte désigne dans la présente invention une zéolithe dont l'ouverture des canaux dodécagonaux principaux a une dimension telle qu'elle est équivalente à une ouverture circulaire ayant un diamètre d'au moins 7 Angtröms ($7 \times 10^{-10}$ m) ;

c) De 0,05 à 40 % et de préférence de 0,1 à 30 %, et d'une manière souvent avantageuse de 0,5 à 10 % en poids, d'offrétite, définie comme précédemment (constituant C).

La somme des pourcentages en poids des constituants A, B et C contenus dans les catalyseurs est égale dans chaque cas à 100 %.

Dans le cas où l'offrétite est ajoutée au catalyseur principal sous forme de particules sphériques séparées de ce dernier mais de même granulométrie que ce dernier, le poids de l'offrétite est compris entre 1 et 90 % (de préférence 5 et 60 %) par rapport au poids des dites particules (autres que celles du catalyseur principal).

Le constituant A comprend au moins une matrice généralement choisie dans le groupe formé par l'alumine, la silice, la magnésie, l'argile, l'oxyde de titane, la zircone, les combinaisons de deux au moins de ces composés et les combinaisons alumine-oxyde de bore.

Le constituant B comprend au moins une zéolithe de structure ouverte, ayant des canaux dodécagonaux d'au moins 7 Angtröms ($7 \times 10^{-10}$ m) d'ouverture, généralement choisie dans le groupe formé par les zéolithes X, Y, L, oméga et bêta. On emploie de préférence les zéolithes de structure faujasite et en particulier les zéolithes Y, de préférence stabilisées, couramment appelées ultrastables ou USY, ou enrichies en silice telle la zéolithe LZ210 décrite dans les brevets US-A-4.403.023 et 4.534.853, EP-A-0.139.291 et 0.124.120, soit sous forme au moins partiellement échangée avec des cations des métaux alcalino-terreux et surtout avec des cations des métaux des terres-rares de numéro atomique 57 à 71 inclus, soit sous forme hydrogène.

Le constituant C, du catalyseur selon l'invention est une offrétite comme expliqué plus haut.

Dans la présente invention l'offrétite peut être employée sous forme hydrogène, donc ne contenant pratiquement aucun cation métallique en dehors de la très faible quantité de cations de métaux alcalins (potassium notamment) qui sont des cations résiduels provenant de la synthèse de la zéolithe. L'offrétite peut également être employée sous forme au moins partiellement échangée par des cations métalliques multivalents ; une partie des sites cationiques de la charpente alumino-silicatée est alors occupée par ces cations ; de tels cations sont par exemple des cations des métaux alcalino-terreux et de préférence des cations des métaux des terres-rares de numéro atomique 57 à 71 inclus et plus spécialement du lanthane ; ces cations sont destinés à bloquer l'évolution structurale de l'offrétite particulière employée qui risque en effet de se produire dans les conditions sévères du régénérateur de l'unité industrielle de craquage.

L'offrétite utilisée dans la présente invention, est une offrétite dont la charpente alumino-silicatée est constituée uniquement d'atomes d'aluminium et d'atomes de silicium ; cependant on peut également employer une offrétite telle que décrite ci-avant dans laquelle une partie de l'aluminium et/ou du silicium de la charpente aluminosilicatée est remplacée, à l'issue de la synthèse, par d'autres éléments, métaux ou métalloïdes, tels que par exemple B, P, Ti, V, Cr, Fe, Mn, Ga, Ge et Zr.

Les conditions générales des réactions de craquage catalytiques sont particulièrement bien connues pour ne pas être répétées ici dans le cadre de la présente invention (voir par exemple US-A-3.293.192 ; 3.449.070 ; 3.518.051 ; 3.607.043).

Les exemples suivants illustrent la présente invention sans en limiter la portée EXEMPLE 1 : Préparation d'une offrétite appelée OFF de rapport SiO$_2$/Al$_2$O$_3$ molaire égal à 52 et conforme à une offrétite utilisable selon la présente invention.

1200 g d'une offrétite synthétique dont l'ouverture des canaux dodécagonaux principaux est de 6,4x10$^{-10}$ m (W. MEIER et D.H. OLSON, Atlas of Zeolite Structure Types, 1978) de rapport molaire SiO$_2$/Al$_2$O$_3$ égal à 8 contenant 9,9 % en poids de potassium et 2,8 % en poids d'ions tétraméthylammonium ont été calcinés à 550°C sous un mélange de 80 % d'azote à 20 % d'air (débit total 3 l.h$^{-1}$.g$^{-1}$) pendant une heure puis sous air pur (débit 3 l.h$^{-1}$.g$^{-1}$) pendant une heure de manière à éliminer les cations TMA$^+$.

Le produit obtenu a ensuite été échangé trois fois par une solution 2 M de nitrate d'ammonium, à 100°C pendant 4 heures, sous agitation, avec un rapport volume de solution sur poids de solide sec (V/P) égal à 5 cm$^3$g$^{-1}$.

Le solide obtenu à l'issue de ces traitements et référencé 1A contient 2,8 % en poids de potassium et son rapport molaire SiO$_2$/Al$_2$O$_3$ est de 8. Son diagramme de diffraction est présenté dans le tableau 1.

L'ouverture des canaux dodécagonaux principaux de l'offrétite n'a pas été modifiée par les traitements.

Le solide 1A est soumis aux traitements successifs suivants :
– self-steaming à 550°C pendant 2 heures (obtention du produit 2A).
– 2 échanges cationiques successifs dans une solution de NH$_4$NO$_3$2M, à 100°C pendant 4 heures sous agitation avec un rapport volume de solution sur poids de solide sec (V/P) égal à 5 cm$^3$g$^{-1}$,
– self-steaming à 650°C pendant 2 heures,
– 1 échange cationique dans une solution de NH$_4$NO$_3$ 2N à 100°C pendant 4 heures sous agitation avec un rapport volume de solution sur poids de solide sec (V/P) égal à 5 cm$^3$g$^{-1}$,
– 1 attaque acide dans HCl 1N à 100°C pendant 2 heures avec un rapport volume de solution sur poids de solide sec égal à 15 cm$^3$g$^{-1}$.

On aboutit alors au solide référence OFF, dont les caractéristiques sont les suivantes :

```
(SiO2/Al2O3)mole                          52
   % K                                    0.13 % poids
paramètres           ⎧  →a              13.01 Å
cristallins          ⎩  →c               7.53 Å
cristallinité (DX)                        91 %
volume microporeux                        0.28 cm³g⁻¹
capacité d'adsorption d'eau               3 %
     (% poids)
capacité d'adsorption de cyclohexane      7,1 %
     (% poids)
```

Comme l'indiquent les caractéristiques précédentes, le solide OFF est une offrétite désaluminée de rapport SiO$_2$/Al$_2$O$_3$ égal à 52, bien cristallisée, à très faible teneur résiduelle en potassium et dont le volume microporeux est élevé.

Comme l'indiquent les caractéristiques précédentes, le solide OFF est une offrétite désaluminée de rapport SiO$_2$/Al$_2$O$_3$ égal à 52, bien cristallisée, à très faible teneur résiduelle en potassium et dont le volume microporeux est élevé.

TABLEAU 1

Diagramme de diffraction X du produit 1A

| 2 thêta | d (nm) | Intensité | 2 thêta | d (nm) | Intensité |
|---------|--------|-----------|---------|--------|-----------|
| 7,70 | 1,145 | 66 | 28,10 | 0,317 | 10 |
| 11,75 | 0,752 | 7 | 28,40 | 0,314 | 24 |
| 13,40 | 0,661 | 37 | 30,55 | 0,292 | 5 |
| 14,10 | 0,268 | 7 | 31,25 | 0,286 | 62 |
| 15,50 | 0,572 | 18 | 31,50 | 0,284 | 59 |
| 17,85 | 0,496 | 2 | 33,50 | 0,267 | 24 |
| 19,50 | 0,455 | 26 | | | |
| 20,50 | 0,433 | 54 | | | |
| 23,31 | 0,382 | 31 | | | |
| 23,70 | 0,375 | 100 | | | |
| 24,90 | 0,357 | 66 | | | |
| 26,20 | 0,340 | $<1$ | | | |
| 27,00 | 0,330 | 23 | | | |
| 27,30 | 0,327 | 7 | | | |

EXEMPLE 2 (non conforme à l'invention) : procédé de craquage réalisé avec un catalyseur équilibré industriel de référence (Cat E),, non conforme à l'invention.

Un essai de craquage catalytique est réalisé à partir d'une charge d'hydrocarbures dont les caractéristiques sont présentées dans le tableau 2. Le catalyseur industriel équilibré utilisé, appelé Cat E, renferme 70 % d'une matrice conventionnelle à base d'une silice alumine riche en silice et de kaolin et renferme 30 % d'une zéolithe Y ultrastable USY. Il a les caractéristiques suivantes :

surface en $m^2.g^{-1}$ = 110
oxyde de terres rares en % poids = 1,6
$Na_2O$ % pds = 0,3
V (ppm) = 4800
Ni (ppm) = 2800
Fe (ppm) = 10200.

Ce catalyseur (cat E) est placé dans le réacteur d'une microunité de test (appelée aussi unité MAT "Microactivity Test Unit") et mis au contact de la charge d'hydrocarbures dans les conditions de test suivantes :

T = 520°C
C/O = 4,8 à 6,5 (*)
quantité de catalyseur : 5 g
durée de l'injection : 40 secondes

(*) Dans tous les exemples qui suivront, la valeur du rapport C/O sera calculée en ne prenant en compte que le catalyseur de référence et donc sans tenir compte de la présence éventuelle d'un additif. En d'autres termes : C = poids en gramme du catalyseur de référence Cat E.

Les résultats sont présentés dans le tableau 3.

<u>TABLEAU 2</u>

<u>CARACTERISTIQUES DE LA CHARGE LOURDE UTILISEE</u>

| | |
|---|---|
| Densité (20°C) | 0,968 |
| Viscosité (solide à 60°C) | |
| (80°C) | 119,8 |
| cSt (100°C) | 52,2 (52,2 $mm^2/s$) |
| Conradson % poids | 5,1 |
| Na ppm | 2 |
| Ni ppm | 12 |
| V ppm | 1 |
| C % poids | 86,9 |
| H % poids | 12,2 |
| N % poids | 0,35 |
| S % poids | 0,21 |
| N basique % poids | 0,055 |
| C aromatique % poids | 22,3 |
| H aromatique % poids | 2,7 |
| Distillation simulée (°C) | |
| 5 % poids | 367 |
| 10 % poids | 399 |
| 20 % poids | 436 |
| 40 % poids | 495 |
| 60 % poids | 575 |
| FBP | 575. |

TABLEAU 3

| Catalyseur | Cat E | | |
|---|---|---|---|
| n° essai | 1 | 2 | 3 |
| C/O* | 4,8 | 5,5 | 6,5 |
| (% poids) | | | |
| Conversion | 62,36 | 69,69 | 73,60 |
| C1-C4 | 12,75 | 16,63 | 17,98 |
| Ess (C5-150) | 30,22 | 33,39 | 32,93 |
| Ess (150-221) | 11,13 | 11,63 | 10,49 |
| Essence totale | 41,35 | 45,02 | 43,42 |
| LCO (221-350) | 15,68 | 14,45 | 12,50 |
| Slurry (350$^+$) | 21,97 | 15,86 | 13,90 |
| Coke | 7,75 | 7,54 | 11,67 |
| H2 | 0,51 | 0,50 | 0,54 |
| C1 | 0,57 | 0,66 | 0,68 |
| C2 | 0,45 | 0,47 | 0,49 |
| C2= | 0,60 | 0,77 | 0,84 |
| C2 totaux | 1,05 | 1,24 | 1,33 |
| C3 | 0,63 | 1,02 | 1,18 |
| C3= | 3,20 | 3,82 | 4,10 |
| C3 totaux | 3,83 | 4,84 | 5,28 |
| iC4 | 1,56 | 2,92 | 3,36 |
| nC4 | 0,49 | 0,85 | 0,98 |
| iC4= | 1,77 | 1,94 | 2,03 |
| nC4= | 3,47 | 4,17 | 4,32 |
| C4 totaux | 7,29 | 9,88 | 10,69 |
| RON ess légère | 92,4 | 92,8 | 93,3 |
| RON ess lourde | 88,6 | 88,9 | 89,4 |
| MON ess légère | 77,9 | 78,3 | 78,5 |
| MON ess lourde | 79,2 | 79,5 | 79,9 |

dans C/O, C = poids du catalyseur Cat E.

Les résultats donnés dans le tableau 3 ont été observés sur de multiples essais. Ultérieurement, il conviendra de régénérer le catalyseur utilisé. Pour ce, le catalyseur sera traité conventionnellement à 780°C pendant 2 heures à pression atmosphérique et en présence d'un mélange de 50 % volume d'air et 50 % volume d'eau. Lors d'une nouvelle utilisation du catalyseur ainsi régénéré, on observe sensiblement les mêmes résultats que ceux donnés dans le tableau 3.

EXEMPLE 3 : Préparation d'un catalyseur conforme à l'invention.

Le produit OFF obtenu dans l'exemple 1 est dilué à raison de 30 % en poids, dans une silice amorphe de granulométrie comparable à celle des offrétites utilisées.

L'additif catalytique ainsi obtenu est pastillé puis réduit en petits agrégats à l'aide d'uns machine à concasser. La fraction comprise entre 40 micromètres et 200 micromètres est ensuite recueillie par tamisage. Cet additif est mélangé mécaniquement de façon classique à raison de 6,7 % et 16,7 % en poids au catalyseur industriel neuf de craquage catalytique utilisé dans l'exemple 2, appelé en abrégé Cat E. Les 2 catalyseurs qui résultent de ces mélanges contiennent ainsi respectivement 2 % en poids ou 5 % en poids de l'offrétite OFF.

On obtient ainsi les deux catalyseurs :

Cat E + 2 % poids OFF (SiO$_2$/Al$_2$O$_3$ : 52)

et

Cat E + 5 % poids OFF (SiO$_2$/Al$_2$O$_3$ : 52).

EXEMPLE 4.

Le premier catalyseur préparé à l'exemple 3 est étudié dans les mêmes conditions et avec la même charge que dans l'exemple 2 (durée de l'injection 40 secondes).

Les résultats obtenus sont présentés dans le tableau 4(*). Ils mettent en évidence les principaux points suivants :

. dans tous les cas les rendements en propylène sont très nettement améliorés,

. dans tous les cas les indices d'octane recherche et moteur sont nettement améliorés

. dans tous les cas, les rendements en essence, gasoil (LCO) et fraction lourde HCO + slurry sont plus faibles,

. dans cet exemple 4, les différences d'indice d'octane et de rendement en essence obtenus dans l'essai 4 par rapport à l'essai 1 de l'exemple 2 précédent sont :

Rdt essence = - 3,89
RON essence légère = + 1,8
RON essence lourde = + 8,9
MON essence légère = + 3,6
MON essence lourde = + 5,2
Rdt propylène = + 3,31 (soit 3,31/3,20, plus du double)
Rdt isobutane = + 2,40 (soit 2,40/1,56 = 154 %)
Rdt n butènes = + 2,0 (soit 2/3,47 = 58 %).

Ces exemples montrent que l'addition de faibles quantités d'offrétite au catalyseur conventionnel de craquage permet d'améliorer nettement la qualité de l'essence et la production de propylène et d'isobutane et, à un degré moindre, de butènes normaux.

EXEMPLE 5 :

Le deuxième catalyseur préparé à l'exemple 3 (Cat E + 5 % pds OFF), constitué du mélange du catalyseur Cat E précèdent et de l'offrétite OFF (SiO$_2$/Al$_2$O$_3$ = 52) est étudié dans les mêmes conditions et avec la même charge que précédemment (exemples 2 et 4) : les résultats sont donnés dans le tableau 4. On peut faire les mêmes observations que celles faites pour l'exemple 4.

(*) Rappelons que pour tous ces résultats, la valeur C de C/O est égale au poids du catalyseur de référence Cat E.

TABLEAU 4

| Catalyseur | Cat E+ 2 % pds OFF | | Cat E+ 5 % pds OFF | | |
|---|---|---|---|---|---|
| n° essai | 4 | 5 | 6 | 7 | 8 |
| C/O (*) | 4,8 | 5,4 | 4 | 4,8 | 5,5 |
| (% poids) | | | | | |
| Conversion | 68,89 | 71,36 | 60,99 | 68,47 | 73,10 |
| C1-C4 | 23,29 | 26,08 | 23,91 | 27,62 | 33,26 |
| Ess (C5-150) | 28,41 | 27,56 | 24,01 | 24,63 | 23,07 |
| Ess (150-221) | 9,04 | 9,00 | 6,26 | 7,03 | 6,19 |
| Essence totale | 37,46 | 36,56 | 30,27 | 31,66 | 29,27 |
| LCO (221-350) | 13,38 | 12,01 | 11,26 | 11,90 | 10,87 |
| Slurry (350+) | 17,73 | 16,18 | 27,76 | 19,64 | 16,03 |
| Coke | 7,75 | 8,73 | 6,47 | 8,81 | 10,11 |
| H2 | 0,39 | 0,45 | 0,34 | 0,39 | 0,47 |
| C1 | 0,54 | 0,57 | 0,43 | 0,56 | 0,56 |
| C2 | 0,40 | 0,41 | 0,35 | 0,41 | 0,45 |
| C2= | 1,04 | 1,23 | 0,99 | 1,48 | 2,00 |
| C2 totaux | 1,44 | 1,64 | 1,35 | 1,88 | 2,46 |
| C3 | 1,48 | 1,96 | 1,46 | 2,11 | 3,37 |
| C3= | 6,51 | 7,21 | 6,20 | 7,37 | 8,53 |
| C3 totaux | 7,99 | 9,17 | 7,65 | 9,48 | 11,90 |
| iC4 | 3,96 | 4,54 | 3,33 | 4,79 | 5,80 |
| nC4 | 1,12 | 1,32 | 1,06 | 1,41 | 2,04 |
| iC4= | 2,78 | 3,02 | 4,25 | 3,78 | 4,16 |
| nC4= | 5,46 | 5,82 | 5,84 | 5,72 | 6,35 |
| C4 totaux | 13,32 | 14,70 | 14,48 | 15,70 | 18,35 |
| RON ess légère | 94,2 | 95,6 | 96,0 | 97,5 | 98,5 |
| RON ess lourde | 97,5 | 98,2 | 93,4 | 98,8 | 99,1 |
| MON ess légère | 81,5 | 82,1 | 80,8 | 82,3 | 82,1 |
| MON ess lourde | 84,4 | 85,5 | 82,2 | 85,7 | 85,6 |

(*) dans C/O, C est égal au poids du catalyseur Cat E de référence.

11

EXEMPLE 6 (non conforme à l'invention).

Après une injection de la charge dans les conditions des exemples 4 et 5 c'est-à-dire en présence des catalyseurs Cat E + 2% OFF et Cat E + 5 % OFF, on constate qu'il devient nécessaire de régénérer les catalyseurs. Ces 2 catalyseurs peuvent être régénérés conventionnellement par un traitement hydrothermique identique à celui qui a été effectué dans l'exemple 2 pour régénérer le catalyseur E, c'est-à-dire à 780°C, pendant 2 heures, sous pression atmosphérique et en présence d'un mélange de 50 % en volume d'air et de 50 % en volume de vapeur d'eau. Le catalyseur E + 5 % OFF traité de cette manière et que l'on appellera "E + 5 % OFF régénéré conventionnellement" est ensuite utilisé à nouveau dans une réaction de craquage avec injection pendant 40 secondes de la charge de l'exemple 2, dans les mêmes conditions des exemples 2 et 5. Les résultats obtenus sont donnés dans le tableau 5 (essai 9). Ces résultats montrent que traité dans les conditions sévères ci-dessus (qui ne nuisent pas au catalyseur E seul comme indiqué dans l'exemple 2), le catalyseur E + 5 % OFF perd une grande partie de ses qualités.

EXEMPLE 7.

Le catalyseur E + 5 % OFF est régénéré, non pas comme indiqué à l'exemple 6, mais conformément à l'invention, dans trois conditions différentes de température et de pression partielle de vapeur d'eau : 745°C et 4 % $H_2O$, 730° et 6,5 % $H_2O$, 695°C et 20 % $H_2O$. Les catalyseurs E + 5 % OFF ainsi régénérés sont utilisés à nouveau dans une réaction de craquage avec injection pendant 40 secondes de la charge dans les conditions de l'exemple 4. Les résultats obtenus sont donnés dans le tableau 5 (essais 10, 11 et 12), qui montre que ici, le catalyseur E + 5 % OFF (régénéré dans les conditions décrites ci-avant) a retrouvé la majeure partie de ses qualités, bien supérieures à celles du catalyseur E.

TABLEAU 5

| Catalyseur | Cat E + 5 % OFF | | | |
|---|---|---|---|---|
| Régénération | Conventionnel-lement 780°-2h-50%H$_2$O | 2 h selon l'invention | | |
| | | 745°C-4%H$_2$O | 730°C-6,5% H$_2$O | 695°C-20%H$_2$O |
| Essai | 9 | 10 | 11 | 12 |
| C/O(*) | 4,8 | 4,8 | 4,8 | 4,8 |
| Conversion | 63,67 | 66,04 | 67,2 | 67,43 |
| C1-C4 | 15,82 | 19,79 | 20,93 | 22,96 |
| Ess légère(C$_5$-150) | 29,47 | 28,75 | 28,58 | 27,30 |
| Ess lourde(150-221) | 10;21 | 9,70 | 9,39 | 8,65 |
| Essence totale | 39,68 | 38,45 | 37,97 | 35,95 |
| LCO (221-350) | 15,40 | 14,32 | 14,01 | 13,64 |
| HCO + slurry(350$^+$) | 21,92 | 19,64 | 19,24 | 18,93 |
| Coke | 7,63 | 7,80 | 7,85 | 8,52 |
| H2 | 0,54 | 0,48 | 0,45 | 0,49 |
| C1 | 0,65 | 0,62 | 0,63 | 0,61 |
| C2 | 0,66 | 0,67 | 0,68 | 0,66 |
| C2$^=$ | 0,75 | 1,05 | 1,00 | 1,20 |
| C3 | 0,92 | 1,21 | 1,33 | 1,51 |
| C3$^=$ | 3,78 | 5,10 | 5,75 | 6,26 |
| iC4 | 2,16 | 3,20 | 3,43 | 3,79 |
| nC4 | 0,69 | 0,91 | 0,99 | 1,08 |
| C4$^=$ 2 t | 1,62 | 1,69 | 1,71 | 1,88 |
| C4$^=$ 1 | 1,35 | 1,38 | 1,40 | 1,51 |
| iC4$^=$ | 2,02 | 2,21 | 2,27 | 2,58 |
| C4$^=$ 2c | 1,22 | 1,27 | 1,29 | 1,39 |
| RON ess légère | 92,9 | 94,0 | 94,5 | 94,9 |
| RON ess lourde | 90,1 | 94,5 | 95,1 | 95,4 |
| MON ess légère | 78,3 | 80,5 | 80,9 | 81,3 |
| MON ess lourde | 80,4 | 82,3 | 83,2 | 84,1 |

(*) Dans C/O, C est égal au poids du catalyseur Cat E de référence.

13

## Revendications

1. Procédé de craquage catalytique d'une charge hydrocarbonée dans lequel on opère en présence d'un catalyseur qui renferme :

a) de 20 à 95 % en poids d'au moins une matrice (constituant A),

b) de 1 à 70 % en poids d'au moins une zéolithe de structure ouverte autre qu'une zéolithe de la famille de l'érionite (constituant B) dont l'ouverture des canaux dodécagonaux principaux a une dimension telle qu'elle est équivalente à une ouverture circulaire ayant un diamètre d'au moins 7 Angtröms (7 x 10⁻¹⁰ m),

c) de 0,05 à 40 % en poids, d'au moins un constituant (c) qui est une zéolithe de la famille érionite ayant une teneur en potassium inférieure à 4 % en poids, la teneur totale en métaux alcalins étant de préférence inférieure à 4 % en poids (constituant C), le dit constituant C, du catalyseur étant à base d'au moins une offrétite dont l'ouverture des canaux dodécagonaux principaux est inférieure à 6,8 x 10⁻¹⁰m, possèdant un rapport molaire SiO₂/Al₂O₃ de 15 à 500, des paramètres cristallins a et c de la maille élémentaire respectivement de 1,285 à 1,315 nm pour a et de 0,748 à 0,757 nm pour c, et une teneur en potassium inférieure à 1,5 % en poids, la dite offrétite ayant en outre :

– un rapport molaire SiO₂/Al₂O₃ supérieur à environ 15,

– une capacité d'adsorption d'azote à 77 K et à un rapport P/Po de 0,19 supérieure à 0,15 cm³ liquide par gramme,

– une capacité d'adsorption du cyclohexane à 25°C et à un rapport P/Po de 0,25 supérieure à 3% en poids,

– et une capacité d'adsorption d'eau, à 25°C pour un rapport P/Po de 0,1 inférieure à 15 % en poids ; ledit catalyseur étant en outre régénéré dans une zone de régénération à une température inférieure à 770°C en présence de 0,5 à 25 % en volume de rapport d'eau par rapport aux gaz introduits dans la zone de régénération.

2. Procédé selon la revendications 1 dans lequel la régénération est effectuée entre 740 et 770°C, le pourcentage en volume de vapeur d'eau étant compris entre 0,5 et 6 %.

3. Procédé selon la revendication 1 dans lequel la régénération est effectuée entre 720 et 740°C, le pourcentage en volume de vapeur d'eau étant compris entre 0,5 et 15 %.

4. Procédé selon la revendications 1 dans lequel la régénération est effectuée à une température comprise entre 720 et 690°C, le pourcentage en volume de vapeur d'eau étant compris entre 0,5 et 25 %.

## Patentansprüche

1. Verfahren zur katalytischen Krackung einer Kohlenwasserstoffbeschickung, bei dem man in Gegenwart eines Katalysators arbeitet, der enthält:

a) 20 bis 95 Gew.-% mindestens einer Matrix (Bestandteil A),

b) 1 bis 70 Gew.-% mindestens eines Zeoliths mit offener Struktur, der verschieden ist von einem Zeolith der Erionit-Familie (Bestandteil B), bei dem die Öffnung der dodekagonalen Hauptkanäle eine solche Dimension hat, daß sie einer kreisförmigen Öffnung mit einem Durchmesser von mindestens 7 x 10⁻¹⁰ m (7 Å) entspricht,

c) 0,05 bis 40 Gew.-% mindestens eines Bestandteils C, bei dem es sich um einen Zeolith der Erionit-Familie handelt mit einem Kaliumgehalt von weniger als 4 Gew.-%, dessen Gesamtgehalt an Alkalimetallen vorzugsweise unterhalb 4 Gew.-% liegt (Bestandteil C), wobei dieser Bestandteil C des Katalysators ein solcher auf Basis mindestens eines Offretits ist, bei dem die Öffnung der dodekagonalen Hauptkanäle unter 6,8 x 10⁻¹⁰ m liegt, der ein Molverhältnis SiO₂/Al₂O₃ von 15 bis 500, Kristallparameter a und c des Kristallgitters von 1,285 bis 1,315 nm für a bzw. von 0,748 bis 0,757 nm für c und einen Kaliumgehalt von weniger als 1,5 Gew.-% aufweist, wobei dieser Offretit außerdem aufweist:

– ein Molverhältnis SiO₂/Al₂O₃ von größer als etwa 15,

– ein Stickstoff-Adsorptionsvermögen bei 77 K und bei einem P/Po-Verhältnis von 0,19 von mehr als 0,15 cm³ Flüssigkeit pro Gramm,

– ein Cyclohexan-Adsorptionsvermögen bei 25°C und bei einem P/Po-Verhältnis von 0,25 von mehr als 3 Gew.-% und

– ein Wasser-Adsorptionsvermögen bei 25°C und einem P/po-Verhältnis von 0,1 von weniger als 0,15 Gew.-%;

wobei dieser Katalysator außerdem in einer Regenerierungszone bei einer Temperatur von weniger als 770°C in Gegenwart von 0,5 bis 25 Vol.-% Wasser, bezogen auf die in die Regenerierungszone eingefürten Gase, regeneriert wird.

2. Verfahren nach Anspruch 1, bei dem die Regenerierung zwischen 740 und 770°C durchgefürt wird und der Volumenprozentsatz an Wasserdampf zwischen 0,5 und 6 % liegt.

3. Verfahren nach Anspruch 1, bei dem die Regenerierung zwischen 720 und 740°C durchgeführt wird und der Volumenprozentsatz an Wasserdampf zwischen 0,5 und 15 % liegt.

4. Verfahren nach Anspruch 1, bei dem die Regenerierung bei einer Temperatur zwischen 720 und 690°C durchgeführt wird und der Volumenprozentsatz an Wasserdampf zwischen 0,5 und 25 % liegt.

**Claims**

1. Process for the catalytic cracking of a hydrocarbon charge, where working takes place in the presence of a catalyst containing:

a) 20 to 95% by weight of at least one matrix (constituent A),

b) 1 to 70% by weight of at least one open-structure zeolite, other than a zeolite from the erionite group (constituent B), whereof the aperture of the main dodecagonal channels has a size which is equivalent to a circular aperture having a diameter of at least 7 Angstroms ($7 \times 10^{-10}$ m),

c) 0.05 to 40% by weight of at least one constituent (C), which is a zeolite from the erionite group and which has a potassium content below 4% by weight, the total alkali metal content being preferably below 4% by weight (constituent C), said constituent C of the catalyst being based on at least one offretite, whereof the aperture of the main dodecagonal channels is below $6.8 \times 10^{-10}$ m, having a $SiO_2/Al_2O_3$ molar ratio of 15 to 500, crystalline parameters a and c of the elementary lattice of respectively 1.285 to 1.315 nm for a and 0.748 to 0.757 nm for c and a potassium content below 1.5% by weight, said offretite also having:

– a $SiO_2/Al_2O_3$ molar ratio higher than approximately 15,

– a nitrogen adsorption capacity at 77 K and a P/Po ratio of 0.19 higher than 0.15 cm$^3$ liquid per gramme,

– a cyclohexane adsorption capacity at 25°C and a P/Po ratio of 0.25 higher than 3% by weight,

– and a water adsorption capacity at 25°C for a P/Po ratio of 0.1 below 15% by weight,

said catalyst also being regenerated in a regeneration zone at a temperature below 770°C, in the presence of 0.5 to 25% by volume of water, based on the gases introduced into the regeneration zone.

2. Process according to claim 1, wherein the regeneration takes place at between 740 and 770°C, the steam volume percentage being between 0.5 and 6.

3. Process according to claim 1, wherein the regeneration is performed at between 720 and 740°C, the steam volume percentage being between 0.5 and 15.

4. Process according to claim 1, wherein the regeneration is performed at between 720 and 690°C, the steam volume percentage being between 0.5 and 25%.